# EUROPÄISCHE PATENTANMELDUNG

(11) **EP 3 106 684 A1**
(43) Veröffentlichungstag der Anmeldung: **21.12.2016**
(21) Anmeldenummer: 16001209.2
(22) Anmeldetag: 27.05.2016
(51) Int. Cl.: F16B 39/12

(54) **DOPPELMUTTER**

(30) Priorität: 20.06.2015 DE 102015007916
(71) Anmelder: Amtek Tekfor Holding GmbH, 77652 Offenburg (DE)
(72) Erfinder: Benz, Tim, 77756 Hausach (DE)

(57) **Zusammenfassung**

Die Erfindung bezieht sich auf eine Doppelmutter (1) mit einer Flanschmutter (2) und einer Einlegemutter (3). Dabei weist die Flanschmutter eine Längsachse und in einem der Einlegemutter zugewandten Endbereich eine Anschlag- (24) und eine Wandfläche (25) auf. Die Einlegemutter weist eine Längsachse und in einem der Flanschmutter zugewandten Endbereich ein Schnappelement (35) auf. Zudem übergreift die Anschlagfläche das Schnappelement radial in Richtung der Längsachse der Flanschmutter. Die Erfindung sieht vor, dass die Flanschmutter eine Führungsfläche (26) im der Einlegemutter zugewandten Endbereich aufweist, wobei die Führungsfläche näher zur Längsachse der Flanschmutter angeordnet ist als die Wandfläche.

## Beschreibung

Die Erfindung bezieht sich auf eine Doppelmutter mit einer Flanschmutter und einer Einlegemutter. Dabei weist die Flanschmutter eine Längsachse und in einem der Einlegemutter zugewandten Endbereich mindestens eine Anschlagfläche und eine an die Anschlagfläche angrenzende Wandfläche auf. Weiterhin weist die Einlegemutter eine Längsachse und in einem der Flanschmutter zugewandten Endbereich mindestens ein Schnappelement auf. Schließlich übergreift die Anschlagfläche das mindestens eine Schnappelement radial in Richtung der Längsachse der Flanschmutter zumindest teilweise.

Doppelmuttern bestehen aus zwei Muttern, die in manchen Ausführungen unterschiedliche Innengewinde aufweisen und die einzeln befestigt werden können. Solche Doppelmuttern erlauben beispielsweise die Verbindung von zwei Wellen oder die Befestigung einer Welle an einem wenigstens einen Stumpf aufweisenden Element. Eine Mutter - hier im Folgenden als Einlegemutter bezeichnet - wird dabei zumindest teilweise in die andere Mutter - im Weiteren bezeichnet als Flanschmutter - eingebracht und wird dort in der Regel gegen ein Herausfallen gehalten.

Eine Doppelmutter offenbart beispielsweise die DE 838 840. Die Einlegemutter verfügt dabei in dem Bereich, der der Flanschmutter zugewandt und der in die Flanschmutter zumindest teilweise eingebracht wird, über Aussparungen, so dass sich mehrere Schnappelemente ergeben. Zudem ist an dem der Einlegemutter zugewandten Endbereich der Flanschmutter ein Rand als Anschlagfläche ausgestaltet, der die Einlegemutter festhält.

Schwierigkeiten von Doppelmuttern liegen zumeist in der Fertigung und - umgekehrt - im Ausbauen der Muttern aus dem verbauten Zustand, also im Lösen der beiden Muttern. Die Problematik liegt gerade darin, dass die Flanschmutter die Einlegemutter übergreift. Bei der Fertigung muss daher die Einlegemutter eingebracht und beim Ausbauen wieder entfernt werden.

Die Aufgabe, die der Erfindung zugrunde liegt, besteht daher darin, eine Doppelmutter vorzuschlagen, die eine möglichst einfache und im Ergebnis sichere und zuverlässige Fertigung erlaubt.

Die erfindungsgemäße Doppelmutter, bei der die zuvor hergeleitete und aufgezeigte Aufgabe gelöst ist, ist zunächst und im Wesentlichen dadurch gekennzeichnet, dass die Flanschmutter eine Führungsfläche in dem der Einlegemutter zugewandten Endbereich aufweist, wobei die Führungsfläche zumindest teilweise näher an der Längsachse der Flanschmutter angeordnet ist als die Wandfläche.

Die Flanschmutter der erfindungsgemäßen Doppelmutter verfügt somit über eine Führungsfläche, die sich radial weiter innen als die Wandfläche befindet, die an die Anschlagfläche angrenzt.

In einer Ausgestaltung beginnt die Führungsfläche entlang der Längsachse der Flanschmutter auf einer Höhe, die - gesehen von der Einlegemutter - hinter der Höhe der Anschlagfläche liegt. Die Führungsfläche liegt somit in dieser Ausgestaltung für die Einlegemutter unterhalb des Bereichs, in dem das Schnappelement von der Anschlagsfläche übergriffen wird bzw. in dem sich eine Überdeckung von Anschlagfläche und Schnappelement ergibt.

Generell wird durch die Führungsfläche in Verbindung zumindest mit der Anschlagfläche und der daran angrenzenden Wandfläche - und ggf. durch mindestens eine weitere Fläche - ein Raum innerhalb der Flanschmutter zumindest teilweise umschlossen, in den die Einlegemutter über das mindestens eine Schnappelement eingebracht wird.

Verfügt die Flanschmutter über eine Innenaussparung, die zumindest teilweise von der Anschlagfläche und der daran angrenzenden Wandfläche begrenzt wird, so wird über die Führungsfläche also ein Raum innerhalb dieser Innenaussparung gesondert begrenzt. Daher ist in einer Ausgestaltung vorgesehen, dass die Führungsfläche radial nicht weiter in der Innenaussparung angeordnet ist als ein von der Flanschmutter zu definierender Innendurchmesser, der sich insbesondere durch ein zu erzielendes Innengewinde ergibt.

Die Führungsfläche hat insbesondere den Zweck, das Schnappelement oder die ggf. vorhandenen Schnappelemente zu führen und damit - vorzugweise über das Einbringen der Einlegemutter in die Flanschmutter - wenigstens eine Bewegungskomponente des Schnappelements bzw. der Schnappelemente zu beeinflussen. Das Schnappelement wird bzw. die Schnappelemente werden daher beim Einbringen der Einlegemutter durch die Führungsfläche geführt. Dies erfolgt vorzugsweise radial nach außen.

In einer Ausgestaltung befindet sich das mindestens eine Schnappelement zwischen der Anschlagfläche, der Wandfläche und der Führungsfläche.

In einer Ausgestaltung ist vorgesehen, dass die Flanschmutter ein Innengewinde aufweist. Die Führungsfläche ist dabei in einer Ausgestaltung insbesondere derartig ausgestaltet, dass sie nicht in das Innengewinde hineinragt. Alternativ bzw. ergänzend bildet die Führungsfläche einen Bestandteil des Innengewindes, insofern ein Element der Flanschmutter teilweise die Führungsfläche und teilweise das Innengewinde bildet.

In einer ergänzenden oder alternativen Ausgestaltung weisen ein Grundkörper der Einlegemutter und das mindestens eine Schnappelement jeweils ein Innengewinde auf. Der Grundkörper ist dabei der eigentliche Körper der Einlegemutter, an den das mindestens eine Schnappelement oder mehrere Schnappelemente angrenzen.

Alternativ hat nur der Grundkörper der Einlegemutter ein Innengewinde und das daran angrenzende Schnappelement hat kein Innengewinde.

In einer Ausgestaltung verfügen der Grundkörper der Einlegemutter und das Schnappelement bzw. die Schnappelemente über unterschiedlich ausgestaltete Innengewinde. So weist in einer Ausgestaltung der Grundkörper der Einlegemutter ein zylindrisches Innengewinde und das mindestens eine Schnappelement ein konisches Innengewinde auf.

Eine Ausgestaltung besteht darin, dass die Führungsfläche und das mindestens eine Schnappelement derartig ausgestaltet und aufeinander abgestimmt sind, so dass die Führungsfläche das Schnappelement bei einem Einbringen der Einlegemutter in die Flanschmutter radial von der Längsachse wegführt. Wird die Einlegemutter in einer Richtung - insbesondere entlang der Längsachse der Flansch- und/oder der Einlegemutter - in die Flanschmutter eingebracht, so wird das mindestens eine Schnappelement durch die Führungsfläche seitlich nach außen weggeführt. Befindet sich also beispielsweise ein Endbereich des Schnappelements für das Einbringen der Einlegemutter in die Flanschmutter radial weiter innen, so wird dieser Endbereich durch die Führungsfläche radial nach außen gelenkt, so dass sich auch wieder ergibt, dass die Anschlagfläche das Schnappelement zuverlässig übergreift und daher die Einlegemutter durch die Flanschmutter gehalten wird.

In einer Ausgestaltung ist vorgesehen, dass die Führungsfläche an einer der Einlegemutter zugewandten Stirnseite nah zur Längsachse der Flanschmutter ist und sich in Richtung einer von der Einlegemutter abgewandten Fußseite von der Längsachse entfernt. In dieser Ausgestaltung ist die Führungsfläche so ausgestaltet, dass sie radial nach außen geneigt ist, so dass also auch das Schnappelement, wenn es in Kontakt mit der Führungsfläche kommt, nach außen geführt wird, je weiter die Einlegemutter und damit das Schnappelement in die Flanschmutter eingebracht wird.

In einer Ausgestaltung ist daher insbesondere vorgesehen, dass sich die Führungsfläche entlang der Längsachse der Flanschmutter konisch nach außen aufweitet.

In einer Ausgestaltung ist das mindestens eine Schnappelement derartig ausgeführt, dass es zumindest abschnittsweise radial relativ zur Längsachse der Einlegemutter elastisch verformbar ist. Vorzugsweise ist das mindestens eine Schnappelement - oder sind in einer Ausgestaltung mit mehreren Schnappelementen die Schnappelemente - derartig ausgestaltet, dass es an den Grundkörper der Einlegemutter angrenzt und dass es vorzugsweise in dem Verbindungsbereich bzw. dem Übergangsbereich elastisch verformbar ist. Die Verformbarkeit bewirkt dabei insbesondere eine radiale Bewegung des Schnappelements bzw. der Schnappelemente, insofern das Schnappelement bzw. die Schnappelemente radial nach innen oder außen gebogen werden können.

Wird das Schnappelement bzw. werden die Schnappelemente nach innen gebogen, so ist es beispielsweise ermöglicht, die Einlegemutter in die Flanschmutter einzubringen bzw. die Einlegemutter wieder aus der Flanschmutter zu entfernen. Die elastische Verformbarkeit hat den Vorteil, dass das Schnappelement bzw. die Schnappelemente wieder in die ursprüngliche Form zurückkehrt bzw. zurückkehren. Dies ist insbesondere beim Einbringen der Einlegemutter in die Flanschmutter vorteilhaft.

Bei der Fertigung wird somit vorzugsweise zunächst das mindestens eine Schnappelement radial nach innen gedrückt und die Einlegemutter wird - z. B. unter gleichzeitiger Aufbringung einer Kraft auf das Schnappelement - in die Flanschmutter eingeführt. Befindet sich das Schnappelement zumindest mit einem wesentlichen Teil hinter der Anschlagfläche und wird die Kraft auf das Schnappelement aufgehoben, so bewegt sich das Schnappelement in seine Ursprungsform zurück und bewegt sich dabei vorzugsweise in den Bereich zwischen der Anschlagfläche und der sich daran anschließenden Wandfläche und damit radial von der Führungsfläche nach außen.

In einer alternativen oder ggf. ergänzenden Ausgestaltung ist das mindestens eine Schnappelement zumindest abschnittsweise in Richtung der Längsachse der Einlegemutter geneigt. In dieser Ausgestaltung ist das Schnappelement somit zumindest abschnittsweise radial nach innen plastisch verformt. Eine solche plastische Verformung wird bei der Verwendung der Doppelmutter vorzugsweise durch den Träger des Außengewindes, auf dem die Einlegemutter aufgebracht bzw. aufgeschraubt wird, ausgeglichen, indem dieser Träger - z. B. eine Welle - das Schnappelement radial nach außen und damit entgegen der Richtung der plastischen Verformung drückt.

In einer Ausgestaltung ist das mindestens eine Schnappelement teilweise plastisch radial verformt und kann überdies zumindest abschnittsweise elastisch verformt werden.

In einer Ausgestaltung verfügt die Einlegemutter über mehrere Schnappelemente, die vorzugsweise gleichmäßig über den Umfang der Einlegemutter verteilt angeordnet sind. Je mehr Schnappelemente vorhanden sind, desto mehr wird die Haltekraft verteilt, die zwischen der Flansch- und der Einlegemutter wirkt.

Für das Einführen der Einlegemutter in die Flanschmutter ist in einer Ausgestaltung vorgesehen, dass das mindestens eine Schnappelement eine Fußfläche aufweist und dass die Fußfläche und die Anschlagfläche korrespondierend zueinander ausgestaltet sind. Die Fußfläche als Außenseite des Schnappelements, die derjenigen Seite des Schnappelements gegenüberliegt, die in Kontakt mit der Führungsfläche kommt, und die entsprechende Anschlagfläche sind vorzugsweise so ausgestaltet, dass beim Einbringen eine gleitende relative Bewegung zwischen Schnappelement und Anschlagfläche ermöglicht wird.

In einer Ausgestaltung ist die Fußfläche insbesondere konisch ausgeführt.

Die Fußfläche und der zugehörige Abschnitt der Anschlagfläche sind in einer Ausgestaltung derartig korrespondierend zueinander ausgeführt, dass die Anschlagfläche ausgehend von der Wandfläche im Wesentlichen unter einem 90°-Winkel radial in Richtung der Längsachse verläuft. Entsprechend verfügt die Fußfläche vorzugsweise ebenfalls über einen Abschnitt, der sich im Wesentlichen plan und vorzugsweise unter einem 90°-Winkel radial nach außen erstreckt.

In alternativen oder ergänzenden Ausgestaltungen sind andere Kombinationen von Hinter- oder Vorderschnitten vorgesehen.

In einer weiteren Ausgestaltung ergibt sich die Anschlagfläche dadurch, dass nach dem Einbringen der Einlegemutter in die Flanschmutter der der Einlegemutter zugewandte Bereich der Flanschmutter umgebördelt wird, so sich ausreichend Überdeckung zwischen der Anschlagfläche und der Fußfläche ergibt. Die Anschlagfläche kann jedoch auch ohne das vorherige Einbringen der Einlegemutter durch einen Bördelvorgang erzeugt werden.

In einer Ausgestaltung öffnet sich die Anschlagfläche fort von der Richtung der Einlegemutter radial - und insbesondere konisch - nach außen. Entsprechend ist bei dieser Ausgestaltung die Fußfläche des Schnappelements bzw. der Schnappelemente ebenfalls mit einem sich unter vorzugweise dem gleichen Neigungswinkel radial nach außen laufenden Konus versehen.

In einer alternativen Ausgestaltung verfügt die Anschlagfläche über eine Auskehlung, in die das Schnappelement entsprechend eingreift.

In einer Ausgestaltung ist die Führungsfläche rotationssymmetrisch ausgestaltet.

In ergänzenden Ausgestaltungen sind die Flanschmutter und/oder die Einlegemutter im Wesentlichen rotationssymmetrisch ausgeführt.

In einer Ausgestaltung wird die Rotationssymmetrie der Einlegemutter dadurch unterbrochen, dass eine ungeradzahlige Anzahl von Schnappelementen vorgesehen ist. Der Grundkörper der Einlegemutter ist bei einer Ausgestaltung jedoch weiterhin rotationssymmetrisch.

Die Einlegemutter und/oder die Flanschmutter hat bzw. haben in einer Ausgestaltung zumindest teilweise abgeflachte Außenflächen, um das Anziehen mit entsprechenden Werkzeugen zu ermöglichen bzw. zu vereinfachen.

Im Einzelnen gibt es eine Vielzahl von Möglichkeiten, die erfindungsgemäße Doppelmutter auszugestalten und weiterzubilden. Dazu wird verwiesen einerseits auf die dem Patentanspruch 1 nachgeordneten Patentansprüche, andererseits auf die folgende Beschreibung eines Ausführungsbeispiels in Verbindung mit der Zeichnung. In der Zeichnung zeigen
- Fig.1: einen Schnitt durch eine erfindungsgemäße Doppelmutter und
- Fig. 2: einen Schnitt durch die Doppelmutter der Fig. 1 während der Fertigung.

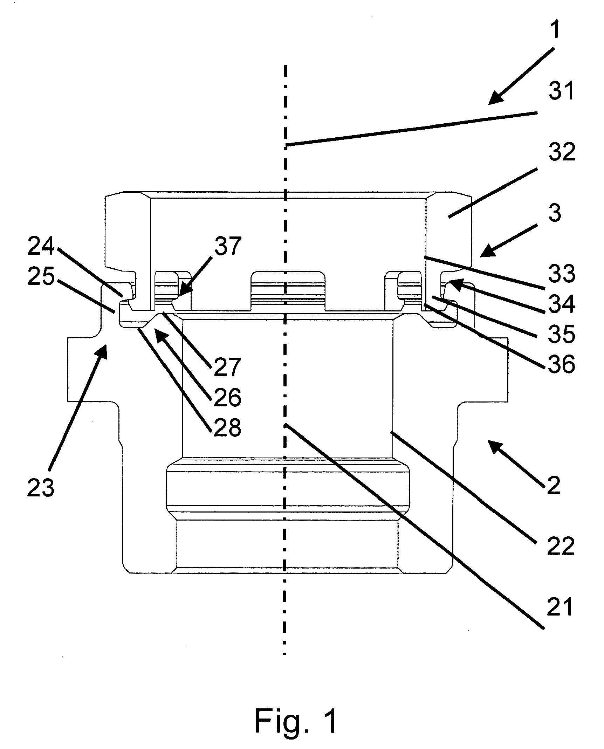

Das Ausführungsbeispiel der Doppelmutter 1 der Fig. 1 besteht aus einer Flanschmutter 2, in der teilweise die Einlegemutter 3 eingebracht ist.

Die Flanschmutter 2 verfügt dabei über eine durchgehende Aussparung um eine Längsachse 21 mit einem Innengewinde 22. Am Endbereich 23 der Flanschmutter 2, das der Einlegemutter 3 zugewandt ist, befindet sich die Anschlagfläche 24, mit der die Flanschmutter 2 die Einlegemutter 3 übergreift und durch die Überdeckung die Einlegemutter 3 festhält.

An die Anschlagfläche 24 grenzt eine Wandfläche 25 an, die hier im Wesentlichen parallel zur Längsachse 21 verläuft.

Radial weiter innen und damit näher an der Längsachse 21 befindet sich die Führungsfläche 26, die hier eine konische Aufweitung fort von der Einlegemutter 3 aufweist. Die Führungsfläche 26 befindet sich mit einer Stirnseite 27 entlang der Längsachse 21 von der Einlegemutter 3 aus gesehen unterhalb der Anschlagfläche 24 und entfernt sich mit der Fußseite 28 weiter von der Längsachse 21 radial nach außen.

Zwischen der Fußseite 28 und der Wandfläche 25 befindet sich ein weiterer Abschnitt, der hier radial auf einer Höhe entlang der Längsachse 21 radial nach außen ragt.

Insgesamt ergibt sich in der Innenaussparung der Flanschmutter 2 ein abgegrenzter Bereich.

Die radial innere Seite des Teils der Flanschmutter 2, das die Führungsfläche 26 trägt, bildet hier auch einen Abschnitt des Innengewindes 22.

Die Einlegemutter 3 verfügt ebenfalls über eine Längsachse 31, die hier mit der Längsachse 21 der Flanschmutter 2 zusammenfällt. Weiterhin ist ein Grundkörper 32 vorgesehen, der auch das Innengewinde 33 trägt. Im Endbereich 34 sind mehrere Schnappelemente 35 vorgesehen, die hier ebenfalls über ein Innengewinde 36 verfügen.

Die Schnappelemente 35 verfügen jeweils über eine Fußfläche 37, die hier radial nach außen gerichtet sind, so dass sich eine Überdeckung zwischen Schnappelement 35 und Anschlagfläche 24 ergibt, die wiederum dafür sorgt, dass die Einlegemutter 3 nicht aus der Flanschmutter 2 herausfallen kann.

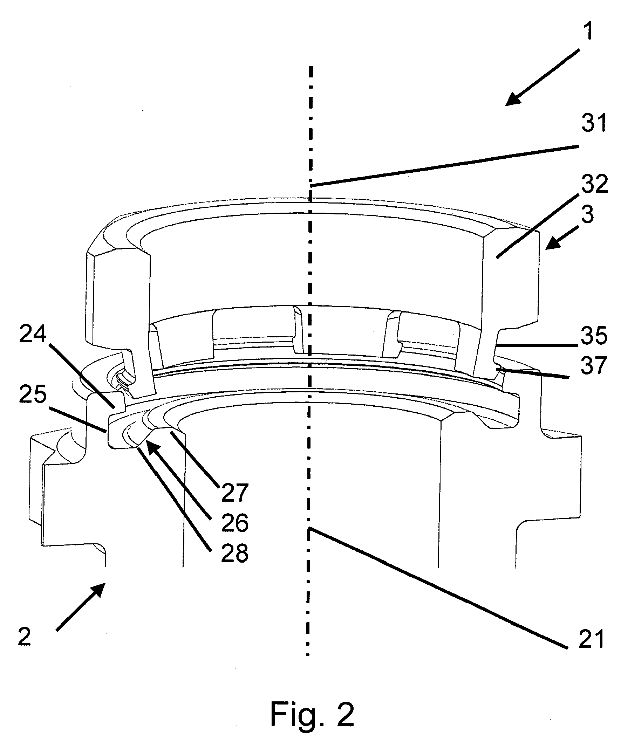

Der Effekt der Führungsfläche 26 wird anhand der Fig. 2 beschrieben, die die Doppelmutter 1 während der Fertigung zeigt.

Für das Einbringen der Einlegemutter 3 in die Flanschmutter 2 werden die Schnappelemente 35 radial in Richtung der Längsachse 31 elastisch gebogen, d. h. wenn die Kraft nicht mehr wirkt, kehren die Schnappelement 35 in ihre vorherige und ursprüngliche Form zurück. Das Verbiegen ereignet sich hier auch insbesondere in dem Bereich des Übergangs vom Grundkörper 32 zu den Schnappelementen 35. Durch das Verbiegen ragen die Fußflächen 37 weniger nach außen und haben insbesondere einen geringeren Außendurchmesser als die Anschlagfläche 24 der Flanschmutter 2.

Um gleichsam das Einfädeln der Einlegemutter 3 in die Flanschmutter 2 zu vereinfachen und um zuverlässig die radiale Ursprungsposition zu erzwingen, ist die Führungsfläche 26 vorgesehen. Da die Führungsfläche 26 sich mit der Tiefe nach außen hin erweitert, werden die Schnappelemente 35 durch das Einbringen der Einlegemutter 3 in die Flanschmutter 2 nach außen und daher unter die hier radial umlaufende Anschlagfläche 24 bewegt.

Insgesamt bilden die Anschlagfläche 24, die Wandfläche 25, die Verbindung zur Fußseite 28 der Führungsfläche sowie die Führungsfläche 26 selbst einen Innenraum innerhalb der Innenaussparung der Flanschmutter 2, in den die Schnappelemente 35 über die elastische Verformung radial in Richtung der Längsachse 21 der Flanschmutter 2 bzw. der Längsachse 31 der Einlegemutter 3 eingebracht werden.

Die Führungsfläche 26 mit der konischen Aufweitung bewirkt, dass eine Kraft, über die die Einlegemutter 3 in die Flanschmutter 2 eingeführt wird, eine Kraftkomponente auf die Schnappelemente 35 in radialer Richtung erhält und dass somit die Schnappelemente 35 nach außen gedrückt werden.

## Patentansprüche

1. Doppelmutter mit einer Flanschmutter und einer Einlegemutter,
wobei die Flanschmutter eine Längsachse und in einem der Einlegemutter zugewandten Endbereich mindestens eine Anschlagfläche und eine an die Anschlagfläche angrenzende Wandfläche aufweist,
wobei die Einlegemutter eine Längsachse und in einem der Flanschmutter zugewandten Endbereich mindestens ein Schnappelement aufweist,
und
wobei die Anschlagfläche das mindestens eine Schnappelement radial in Richtung der Längsachse der Flanschmutter zumindest teilweise übergreift,
**dadurch gekennzeichnet,**
**dass** die Flanschmutter eine Führungsfläche in dem der Einlegemutter zugewandten Endbereich aufweist,
wobei die Führungsfläche zumindest teilweise näher an der Längsachse der Flanschmutter angeordnet ist als die Wandfläche.

2. Doppelmutter nach Anspruch 1, **dadurch gekennzeichnet, dass** die Führungsfläche und das mindestens eine Schnappelement derartig ausgestaltet und aufeinander abgestimmt sind, so dass die Führungsfläche das Schnappelement bei einem Einbringen der Einlegemutter in die Flanschmutter radial von der Längsachse der Flanschmutter wegführt.

3. Doppelmutter nach Anspruch 2, **dadurch gekennzeichnet, dass** die Führungsfläche an einer der Einlegemutter zugewandten Stirnseite nah zur Längsachse der Flanschmutter ist und sich in Richtung einer von der Einlegemutter abgewandten Fußseite von der Längsachse der Flanschmutter entfernt.

4. Doppelmutter nach einem der Ansprüche 1 bis 3, **dadurch gekennzeichnet, dass** das mindestens eine Schnappelement zumindest abschnittsweise radial relativ zur Längsachse der Einlegemutter elastisch verformbar ist.

5. Doppelmutter nach einem der Ansprüche 1 bis 4, **dadurch gekennzeichnet, dass** das mindestens eine Schnappelement zumindest abschnittsweise in Richtung der Längsachse der Einlegemutter geneigt ist.

6. Doppelmutter nach einem der Ansprüche 1 bis 5, **dadurch gekennzeichnet, dass** das mindestens eine Schnappelement eine - insbesondere konisch verlaufende - Fußfläche aufweist und dass die Fußfläche und die Anschlagfläche korrespondierend zueinander ausgestaltet sind.

7. Doppelmutter nach einem der Ansprüche 1 bis 6, **dadurch gekennzeichnet, dass** die Einlegemutter mehrere Schnappelemente aufweist.

8. Doppelmutter nach einem der Ansprüche 1 bis 7, **dadurch gekennzeichnet, dass** die Führungsfläche rotationssymmetrisch ausgestaltet ist.

9. Doppelmutter nach einem der Ansprüche 1 bis 8, **dadurch gekennzeichnet, dass** die Flanschmutter ein Innengewinde aufweist.

10. Doppelmutter nach einem der Ansprüche 1 bis 9 **dadurch gekennzeichnet, dass** die Einlegemutter ein - insbesondere zylindrisches - Innengewinde in einem Grundkörper aufweist und dass das mindestens eine Schnappelement ein - insbesondere unterschiedlich zum Innengewinde des Grundkörpers ausgestaltetes und ganz insbesondere konisches - Innengewinde aufweist.
